# EUROPEAN PATENT SPECIFICATION

(11) **EP 0 854 829 B1**
(45) Date of publication and mention of the grant of the patent: **11.09.2002**
(21) Application number: 95936215.3
(22) Date of filing: 13.10.1995
(51) Int. Cl.: B65D 85/48, B65D 85/57

(54) **300 mm SHIPPING CONTAINER**
300MM VERSANDBEHÄLTER
RECEPTACLE DE TRANSPORT DE 300 mm

(43) Date of publication of application: 29.07.1998
(73) Proprietor: Empak, Inc., Chanhassen, MN 55317 (US)
(72) Inventor: JACOBY, Robert, Colorado Springs, CO 80920 (US); GREGERSON, Barry, Deephaven, MN 55331 (US)
(74) Representative: MacGregor, Gordon
(86) International application number: US9512514
(87) International publication number: WO97013708

(56) References cited:
- US-A- 3 889 815
- US-A- 4 555 024
- US-A- 5 273 159
- US-A- 5 423 422

## Description

The present invention relates to containers used to transport items from one location to another. More specifically, the present invention relates to containers particularly well suited for the transport of silicon wafers, rigid memory disks, photo masks, liquid crystal displays and flat panel displays.

### II. Description of the Prior Art

Various containers have been used in the electronics industry to transport masks, displays, disks and wafers. The fragile nature of such items requires very reliable means for supporting such items within the container. Such items must be protected from vibration and shock. Such items must be held in such a way that they do not scrape, rub or impact the surfaces of the container or the other items stored therein. Such items must also be protected from particulation, static electricity and outgassing.

A recent trend has developed in the electronics industry, the result of which is the growth in size of masks, displays, wafers and disks. For example, while most wafers in use today have a diameter of 200mm or less, new standards centered around 300mm wafers are emerging. In the future, even larger wafers are likely to come into widespread use. As the size, weight and surface area of the wafers increase, new techniques must be found to protect them from damage. Rigid supports so prevalent in prior art containers to retain wafers are not sufficiently effective in protecting these larger wafers, particularly when the wafers are to be transported over great distances. Likewise, the flexible supporting schemes used in the prior art do not provide adequate support to minimize damage to the wafers. Conventional schemes provided two supports, one in the top and one in the bottom of the container which were positioned 180o from each other when the top was closed, see US-A-5 273 159, base for the preamble of claim 1. Thus, there is a real need for shipping container capable of securely holding larger fragile items in a way to protect such items during transport.

### SUMMARY OF THE INVENTION

The present invention provides a container as defined in the appended claims 1 - 3. Typically the container has a bottom, a removable top, and three internal cushions. Each of the cushions include a plurality of elongate channels that, in use, each extend circumferentially along a peripheral edge of a wafer. Two of the cushions are removably secured to the bottom of the shipping container and one is removably secured to the top. When the top is closed, the center lines of support provided by the three cushions are equally spaced at 1200. This improved support geometry allows for a much greater load bearing area than conventional two cushion designs.

Conventional two cushion designs having the cushions positioned 180° from each other are more than adequate for lighter, smaller objects. However, they provide insufficient support for larger wafers or the like when the container is carried or shook from side to side. By providing three cushions and having them equally spaced around the edge of the items to be shipped, sufficient load bearing area is provided in all directions rather than just in the up and down directions. The use of three cushions in this manner also minimizes wafer rotation. This is desirable because particles.generated as a result of wafer rotation can damage the wafers.

The advantages of the present invention will become more apparent from the reading of the detailed description of the preferred embodiment set forth below in conjunction with the drawings which form a part of the specification.

### BRIEF DESCRIPTION OF THE DRAWINGS

Figure 1 is a perspective view of the shipping container's exterior;
Figure 2 is a top plan view of the container's exterior;
Figure 3 is an elevational side view of the container's exterior;
Figure 4 is an elevational end view of the container's exterior;
Figure 5 is a bottom plan view of the container's exterior;

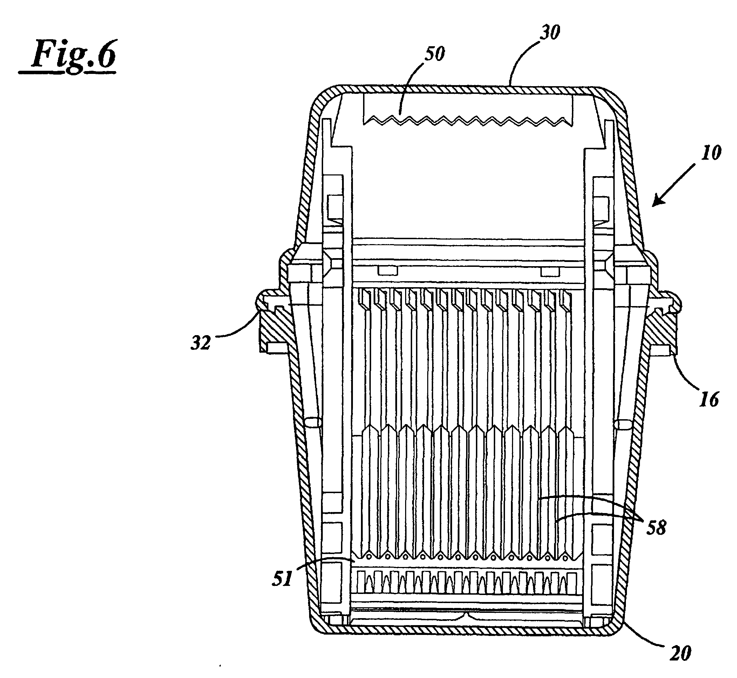

Figure 6 is a cross section through line A-A in figure 3;
Figure 7 is a cross section through line B-B in figure 4;
Figure 8 is a schematic representation of a conventional prior art support technique;
Figure 9 is a schematic representation of the support technique of the present invention.

### DESCRIPTION OF THE PREFERRED EMBODIMENT

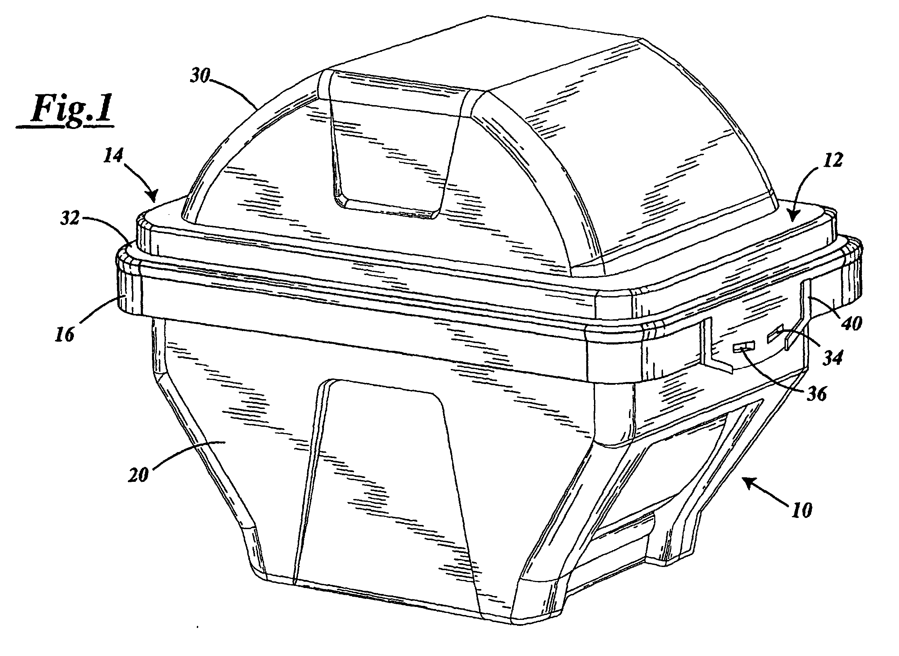

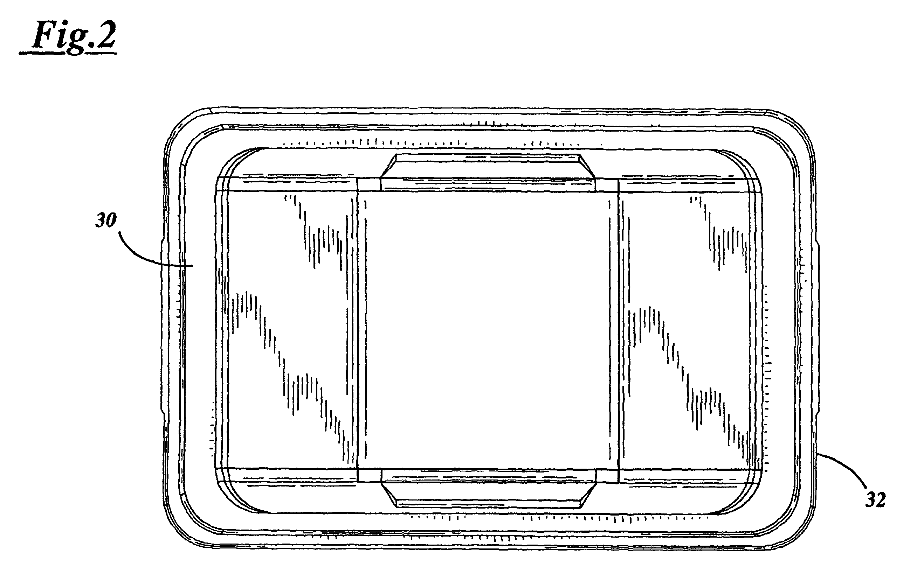

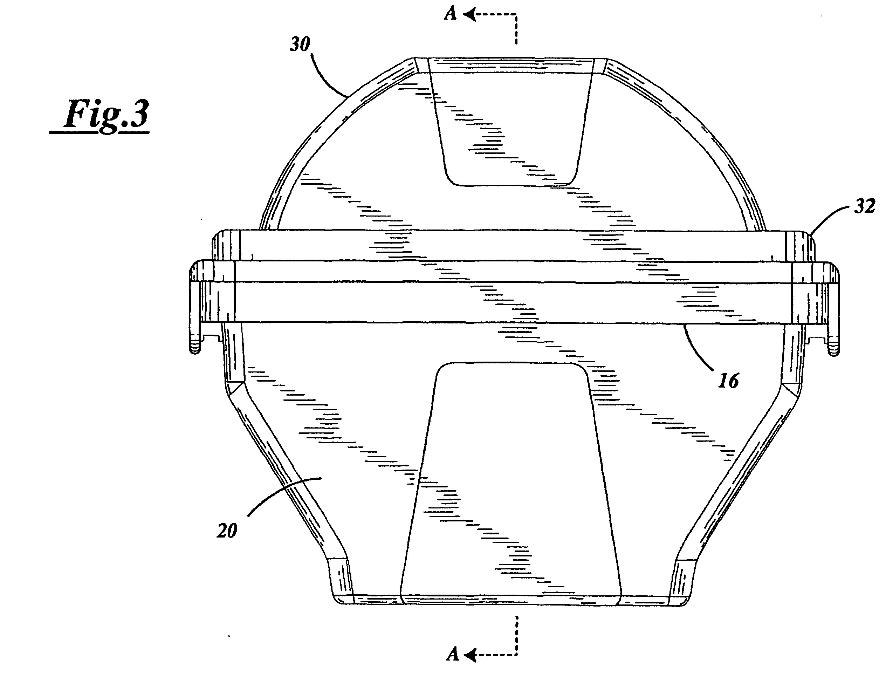

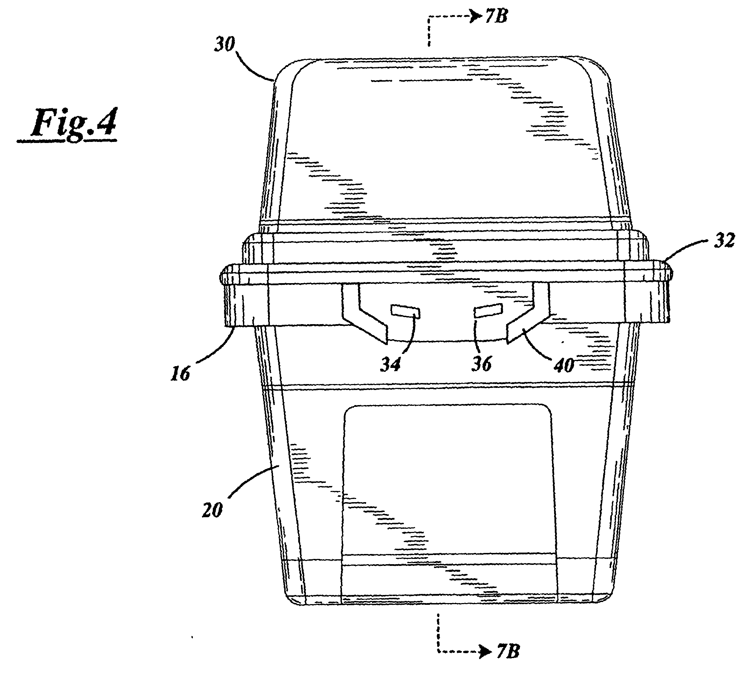

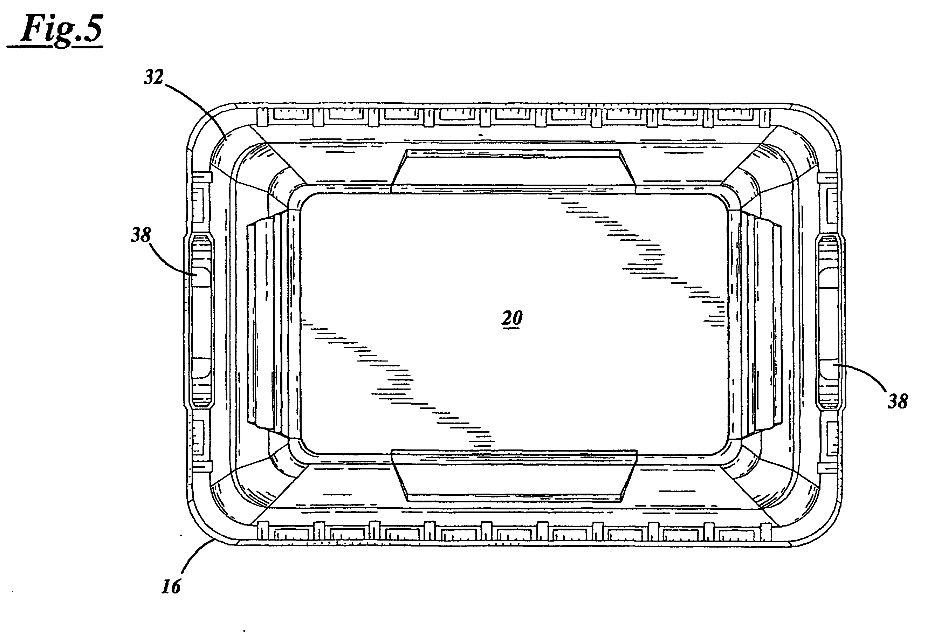

Figures 1-5 show the exterior of the container 10. The container 10 is specifically designed for transporting a plurality of items. Container 10 includes a bottom 20 having an opening for loading and unloading items and removable top 30 for covering the opening. The top 30 includes a skirt 32 which is designed to overlap the outer edges of the bottom 20 when the top 30 is in the closed position over the opening in the bottom. The container 10 also has a pair of handles 40 on the ends 12 and 14. One can grip and hold the container 10 at a variety of places.

Several techniques can be used to latch the bottom 20 to the top 30. For example, holes, such as 34 and 36, can be made in the skirt 32 of the top. Holes 34 and 36 are sized and positioned which mate with projections 38 on the bottom 20 when the top 30 is in the closed position. When this technique is used, there is a need for the skirt 32 to be gripped and flexed to move the holes 34 and 36 away from the projections 38 to unlatch the top 30 from the bottom 20. Other types of latches are well known in the art which could readily be used by those skilled in the art to latch the top 30 and bottom 20 together.

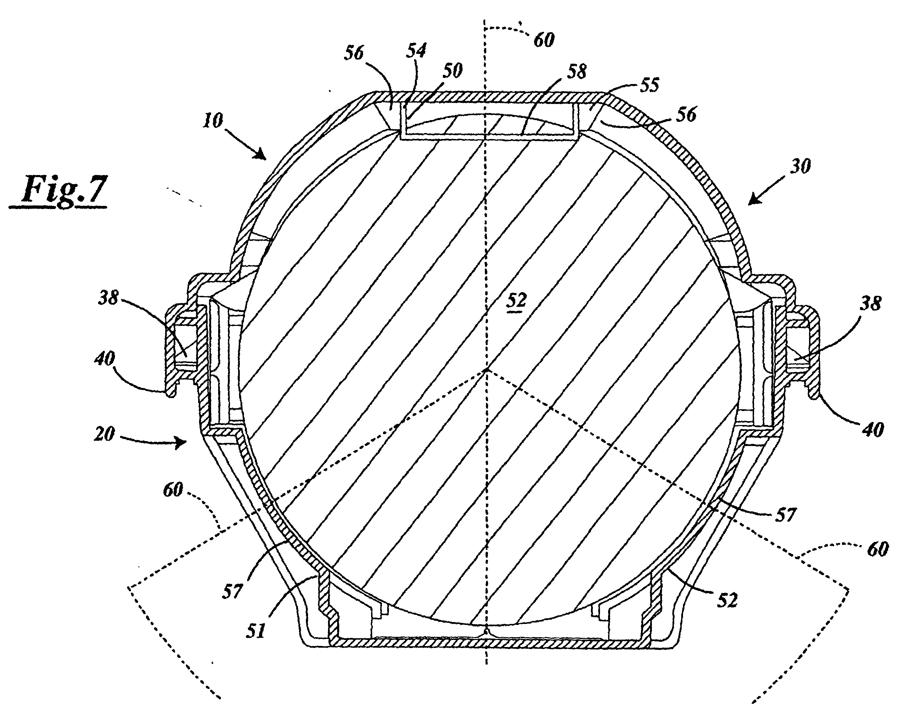

Of greater significance is the interior construction of the container 10. As shown in figure 7, three cushions 50, 51 and 52 are secured to the inside walls of the container 10. Two of the cushions 51 and 52 are attached to the bottom 20 and other cushion 50 is attached to the top 30. With the cover 30 closed, the three cushions are centered about the interior of the container 10 at a 1200 angle with respect to each other.

The cushions 50, 51 and 52 are removable from the container 10. This allows cushions of differing designs to be used to hold different types of items. For example, cushions such as those shown in U.S. Patent 5,423,422 can be used in the container 10 to hold flat panel or liquid crystal displays. When the container 10 is used to hold silicon wafers or memory disks, cushions like those disclosed in U.S. Patent 5,273,159 might be used. Both of these patents are owned by Empak, Inc.. Other types of cushions could be used for masks or other items to be held. Also, because the cushions 50, 51 and 52 can be removed and replaced, the useful life of the container 10 is extended.

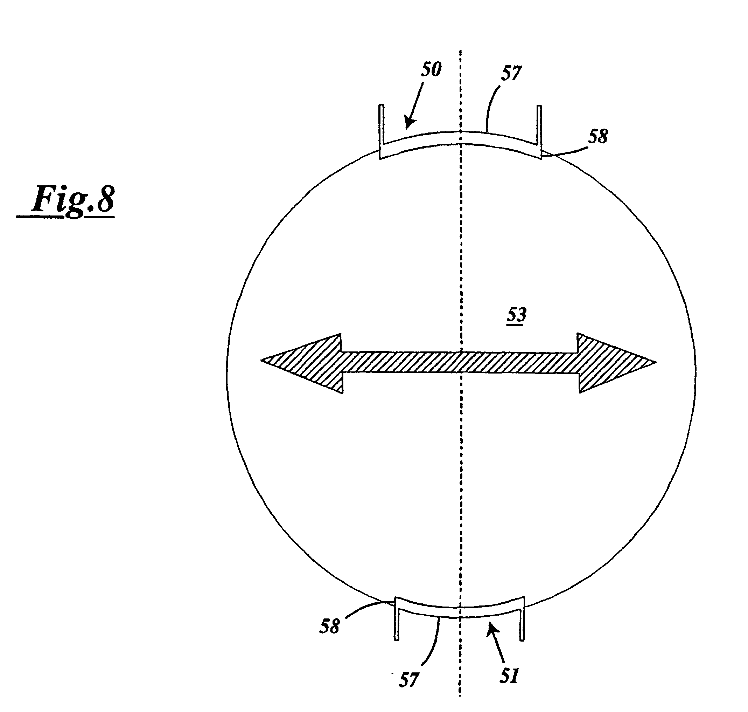

Figure 8 shows how cushions 50 and 51 of this type were used in pairs in the prior art. When such cushions 50 and 51 are used as shown in figure 8, such cushions are capable of adequately supporting smaller, lighter items. However, two cushion configurations are not adequate to fully support larger, heavier objects such as 300mm diameter silicon wafers.

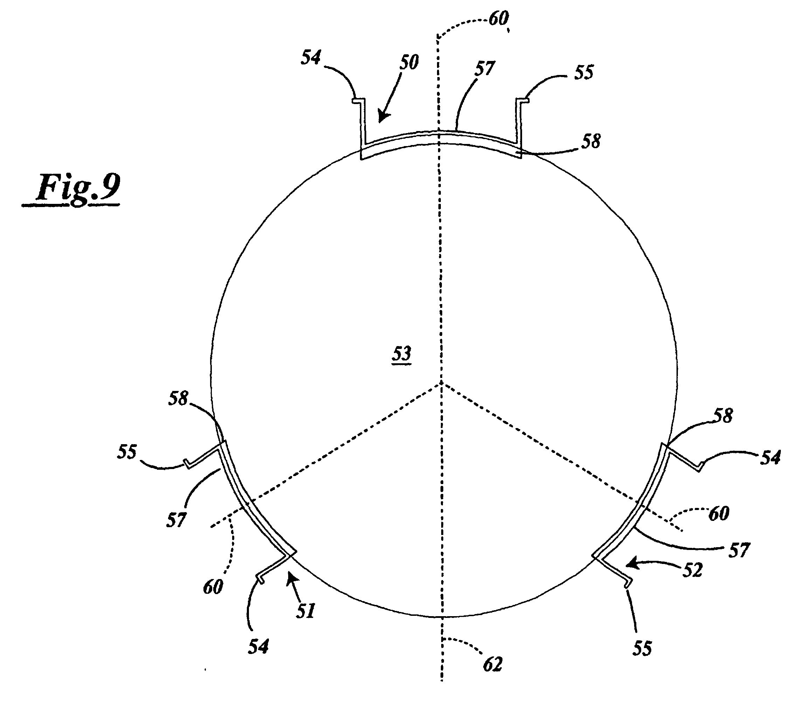

The problems inherent in the design shown in figure 8 are overcome by adding a third cushion 52 and positioning the three cushions 50, 51 and 52 as shown in figure 9. Forces caused by shock or vibration are absorbed by the three cushions 50, 51 and 52 so that items do not become dislodged.

In figure 9, wafer cushions 51 and 52 are attached to the bottom 20. Cushions 51 and 52 have center line of support 60 with respect to the wafers 53 about 1200 from each other and about 60o from the bottom of the wafers 53. When the top 30 is in place, cushion 50 also engages and supports the wafers 53 so that the center line of support 60 associated with cushion 50, 51 and 52 are separated by approximately 120°.

The precise construction of the cushions 50, 51 and 52 will depend upon the items 53 to be held in the container 10. However, such cushions 50, 51 and 52 will preferably have certain features in common. Such cushions are preferably made of a flexible elastomixic or thermoplastic material. Each cushion will have two parallel rails 54 and 55 designed to engage and be retained by tracks in the container to hold the cushions 50, 51 and 52 in place. Extending between the rails 54 and 55 are a plurality of deformable members 57, each of which is intended to help support of one of a plurality of items. Each of the deformable members 57 will generally have a pair of dividers forming a channel 58 in which the edge of the item 53 to be supported is received. The channels 58 of the three cushions 50, 51 and 52 are aligned so that cushions 50, 51 and 52 work in conjunction to support a plurality of items 53 in a spaced apart, parallel registration. Most typically, the cushions 50, 51 and 52 will be centered on the respective center lines of support 60. While this is not necessarily the case, it is advantageous to have a portion of each cushion present on either side of its associated center line of support 60.

The principal benefits derived from positioning cushions 50, 51 and 52 as shown in figures 7 and 9 relate to the support provided to the items 53 stored in the container 10. This arrangement makes it possible for the cushions 50, 51 and 52 to securely hold items of a larger size and weight (for example, wafers having a diameter of 300mm or more) and withstand jarring of the container 10 in any direction. The arrangement shown in figure 8 can handle jarring in the up and down directions. However, when a jarring force is applied from the side (as shown by the arrow 100 in figure 8) and larger, heavier items 53 are stored in the container, the items 53 can come loose or be damaged. Thus, the arrangement shown in figures 7 and 9 is superior to that shown in figure 8.

Those skilled in the art will recognize that bottom 20 and top 30 can be made of a clear material so the contents of the container 10 can be viewed even when the container 10 is closed. Likewise, a bar code, transponder, or microterminal could be affixed to the container 10 for identification, tracking, or communications purposes. Also, a gasket or O-ring can be provided to ensure a tight seal between the top and bottom. Finally, because the cushions 50, 51 and 52 are removable, one skilled in the art, without deviating from the invention, could construct a cassette which, when inserted within the container 10, would serve the same function as one or more of the cushions.

The description provided above in combination with the attached drawings will give those skilled in the art a clear understanding of the present invention, the scope of which is defined by the following claims.

## Claims

1. A container (10) of the type for holding semiconductor wafers (53), said container comprising:
a bottom (20) having an opening for loading and unloading of the wafers (53);
a removable top (30) for closing the opening; and
a plurality of cushions (50, 51, 52) for holding the wafers in place in a parallel, spaced apart relation to each other each of the cushions including a plurality of elongate channels (58) that, in use, each extend circumferentially along a peripheral edge of a wafer;
the container (10) **characterised in that** there are three cushions (50, 51, 52) for supporting the wafers (53),
wherein one of the cushions (50) is removably attached to the top (30) of the container (10) and the other two cushions (51, 52) are removably attached to the bottom (20) of the container, and
wherein the cushions are adapted to support the wafers along a centreline of support (60), the centreline of supports associated with each cushion being located approximately 120 degrees apart when the top and bottom are engaged to close the opening.

2. The container of claim 1 further **characterised in that** the two cushions (51, 52) attached to the bottom of the container are symmetrically offset from a centreline (62) that extends through the bottom (20) of the container (10).

3. The container of claim 1 further **characterised in that** each of the cushions (50, 51, 52) has a pair of rails (54, 55), a plurality of deformable members (57), each deformable member having a pair of dividers forming said channels (58).

## Patentansprüche

1. Behälter (10) zum Halten von Halbleiter-Wafern (53), wobei der Behälter umfasst:
ein Unterteil (20) mit einer Öffnung zum Laden und Entladen der Wafer (53),
ein abnehmbares Oberteil (30) zum Verschließen der Öffnung, und
mehrere Polster (50,51,52) zum Halten der Wafer an Ort und Stelle in einer zueinander parallelen, beabstandeten Beziehung, wobei jedes der Polster mehrere längliche Kanäle (58) aufweist, die sich bei Gebrauch umfangsmäßig längs eines Umfangsrandes eines Wafers erstrecken,
wobei der Behälter **dadurch gekennzeichnet ist, dass** er drei Polster (50,51,52) zum Haltern der Wafer (53) aufweist,
wobei eines der Polster an dem Oberteil (30) des Behälters (10) abnehmbar angebracht ist und die anderen beiden Polster (51,52) an dem Unterteil (20) des Behälters abnehmbar angebracht sind, und
wobei die Polster so ausgestaltet sind, dass sie die Wafer längs einer Unterstützungs-Mittellinie (60) haltern, wobei die jedem Polster zugeordnete Unterstützungs-Mittellinie um etwa 120 Grad (von einer anderen) beabstandet ist, wenn das Oberteil und das Unterteil in Eingriff stehen, um die Öffnung zu verschließen.

2. Behälter nach Anspruch 1, ferner **dadurch gekennzeichnet, dass** die beiden an dem Unterteil des Behälters angebrachten Polster (51,52) von einer Mittellinie (62), die sich durch das Unterteil (20) des Behälters (10) erstreckt, symmetrisch versetzt sind.

3. Behälter nach Anspruch 1, ferner **dadurch gekennzeichnet, dass** jedes der Polster (50,51,52) ein Paar Schienen (54,55) und mehrere verformbare Elemente (57) aufweist, wobei jedes verformbare Element ein Paar die Kanäle (58) bildende Unterteiler aufweist.

## Revendications

1. Un récipient (10) du type devant contenir des tranches de semi-conducteurs (53), ledit récipient comprenant :
un fond (20) ayant une ouverture pour charger et décharger les tranches (53) ;
un couvercle (30) amovible pour fermer l'ouverture ; et
une pluralité de coussins (50, 51, 52) pour tenir en place les tranches en un emplacement mutuel, parallèle et espacé, chacun des coussins comprenant une pluralité de canaux (58) allongés qui, en utilisation, s'étendent chacun de façon circonférentielle sur un bord périphérique d'une tranche ;
le récipient (10) étant **caractérisé en ce que** sont prévus trois coussins (50, 51, 52) pour supporter des tranches (53) ;
dans lequel l'un des coussins (50) est fixé de façon désolidarisable sur le couvercle (30) du récipient (10) et les deux autres coussins (51, 52) sont fixés de façon désolidarisable sur le fond (20) du récipient, et
dans lequel les coussins sont adaptés pour supporter des tranches le long d'un axe de support (60), les axes de support associés à chaque coussin étant répartis à environ 120° les uns des autres, lorsque le coussin et le fond sont mis en prise pour fermer l'ouverture.

2. Le récipient selon la revendication 1, **caractérisé en outre en ce que** les deux coussins (51, 52), fixés au fond du récipient, sont décalés symétriquement par rapport à un axe (62) passant par le fond (20) du récipient (10).

3. Le récipient selon la revendication 1, **caractérisé en outre en ce que** chacun des coussins (50, 51, 52) comporte une paire de rails (54, 55), une pluralité d'organes (57) déformables, chaque organe déformable ayant une paire de diviseurs formant lesdits canaux (58).
